# EUROPEAN PATENT APPLICATION

(11) **EP 4 746 147 A1**
(43) Date of publication of application: **20.05.2026**
(21) Application number: 25199753.2
(22) Date of filing: 02.09.2025
(51) Int. Cl.: H01M 50/204, H01M 50/238, H01M 50/24, H01M 50/244, H01M 50/251, H01M 50/271, B65D 90/00, B65D 88/12

(54) **COVER FOR ENERGY STORAGE APPARATUS AND ENERGY STORAGE APPARATUS INCLUDING THE SAME**

(30) Priority: 29.10.2024 KR 20240149234
(71) Applicant: SAMSUNG SDI CO., LTD., Yongin-si, Gyeonggi-do 17084 (KR)
(72) Inventor: KIM, Daae, 17084 Yongin-si (KR)
(74) Representative: Marks & Clerk LLP

(57) **Abstract**

A cover for an energy storage apparatus includes: a rotation shaft arranged on one side of an open upper surface of an apparatus main body; and a cover main body having one end portion fixed to the rotation shaft and configured to open and close the open upper surface of the apparatus main body by being wound or unwound around the rotation shaft at the one end portion thereof.

## Description

### BACKGROUND

### 1. Field

Aspects of embodiments of the present disclosure relate to a cover for an energy storage apparatus and an energy storage apparatus including the same.

### 2. Description of the Related Art

Recently, as issues such as power shortages or the desire for eco-friendly energy come to the fore, energy storage systems (ESSs) for storing generated power have attracted more attention.

For example, smart grid systems have been provided as one measure to control power supply and demand. An amount of power used by consumers may not be constant at all times and may change from time to time. For example, by using ESSs, power management systems, such as smart grid systems, may be easily established, and thus, power supply and demand may be easily adjusted in particular areas or cities. For example, as commercialization of electric vehicles begins in earnest, ESSs may be applied to electric vehicle charging stations at where electric vehicles are charged.

ESSs may be configured in various forms but generally include one or more battery containers. Containers may be components provided to accommodate items inside and often refer to shipping containers that may be transported on land as well as by sea. In particular, shipping containers may have large sizes, such as 20-foot containers or 40-foot containers. Similar to shipping containers, battery containers included in ESSs may have large sizes, and thus, the term "containers" may be used to refer to the battery containers.

A battery container may include a plurality of batteries connected to one another in series and/or parallel. The plurality of batteries may be stacked and accommodated through a separate fixed structure, such as a rack frame.

To increase energy density of the battery container, an empty space inside the battery container should be minimized, and accordingly, a method of more easily installing a separate fixed structure, such as a rack frame, inside the battery container is being developed.

The above-described information provided in the background of the present disclosure is intended to improve understanding of the background of the present disclosure and, therefore, it may include information that does not constitute the related (or prior) art.

### SUMMARY

Embodiments of the present disclosure provide a cover for an energy storage apparatus that enables easy installation of a separate fixed structure, such as a rack frame, inside the energy storage apparatus to increase energy density and an energy storage apparatus including the same.

Aspects and features of the present disclosure are not limited to those mentioned above, and other aspects and features may be understood by the following description and will be more clearly understood by describing embodiments of the present disclosure.

According to an embodiment, a cover for an energy storage apparatus includes: a rotation shaft arranged on one side of an (open) upper surface of an apparatus main body (which is opened); and a cover main body having one end portion fixed to the rotation shaft and configured to open and close the (open) upper surface of the apparatus main body by (or while) being wound or unwound around the rotation shaft at (or on the basis of) the one end portion (thereof).

The rotation shaft may have an elastic (or elastically have a) rotation restoring force in a direction in which the cover main body is wound.

The cover may further include a manipulation portion arranged on another end portion of the cover main body. The manipulation portion may have a shape corresponding to another side of the (open) upper surface of the apparatus main body.

A sealing member may be arranged on an edge of the (open) upper surface of the apparatus main body, and the sealing member may be configured to seal (or seals) an inside of the apparatus main body when the cover main body closes the (open) upper surface of the apparatus main body.

The sealing member may not be at a portion of the edge of the open upper surface of the apparatus main body on which one end portion of the cover main body is arranged. In other words, the sealing member may be arranged on a remaining portion of the edge of the upper surface of the apparatus main body, except for a portion of the edge of the upper surface of the apparatus main body on which one end portion of the cover main body is arranged.

The cover main body may include a carbon fiber sheet.

The cover main body may include a light-blocking material or may have a surface coated with a light blocking material.

The cover may further include a locking portion arranged on another (or the other) side of the (open) upper surface of the apparatus main body (and configured) to detachably fix another (or the other) end portion of the cover main body.

The locking portion may include: a locking protrusion arranged on the other side of the (open) upper surface of the apparatus main body (and configured) to be linearly movable in a vertical direction to be coupled (or and coupled) to or separated from a locking hole (formed) in the other end portion of the cover main body; and an actuator arranged on the other side of the (open) upper surface of the apparatus main body and configured to linearly move the locking protrusion.

A plurality of locking portions may be arranged in a front-back direction on the other side of the (open) upper surface of the apparatus main body.

According to another embodiment, an energy storage apparatus includes: an apparatus main body configured to accommodate (or accommodating) a battery (inside) and having an open upper surface (or an upper surface that is opened); and a cover configured to selectively cover the open upper surface of the apparatus main body (or a cover for the energy storage apparatus which covers upper surface of the apparatus main body that is opened). The cover includes: a rotation shaft arranged on one side of the (open) upper surface of the apparatus main body; and a cover main body having one end portion fixed to the rotation shaft and configured to open and close the (open) upper surface of the apparatus main body by being wound or unwound at the one end portion (or while being wound or unwound on the basis of the one end portion).

The rotation shaft may have an elastic (or elastically have a) rotation restoring force in a direction in which the cover main body is wound.

The energy storage apparatus may further include a manipulation portion arranged on another end portion of the cover main body and having a shape corresponding to another side of the (open) upper surface of the apparatus main body.

The energy storage apparatus may further include a sealing member arranged on an edge of the (open) upper surface of the apparatus main body and configured to seal (or seals) an inside of the apparatus main body when the cover main body closes the (open) upper surface of the apparatus main body.

The sealing member may not be arranged at a portion of the edge of the open upper surface of the apparatus main body at where the one end portion of the cover main body is arranged. In other words, the sealing member may be arranged on a remaining portion of the edge of the upper surface of the apparatus main body, except for a portion of the edge of the upper surface of the apparatus main body on which one end portion of the cover main body is arranged.

The cover main body may include a carbon fiber sheet.

The cover main body may include a light-blocking material or may have a surface coated with a light blocking material.

The energy storage apparatus may further include a locking portion arranged on another (or the other) side of the (open) upper surface of the apparatus main body (and configured) to detachably fix another (or the other) end portion of the cover main body.

The locking portion may include: a locking protrusion arranged on the other side of the (open) upper surface of the apparatus main body (and configured) to be linearly movable in a vertical direction to be coupled (or and coupled) to or separated from a locking hole (formed) in the other end portion of the cover main body; and an actuator arranged on the other side of the (open) upper surface of the apparatus main body and configured to linearly move the locking protrusion.

A plurality of locking portions may be arranged in a front-back direction on the other side of the (open) upper surface of the apparatus main body.

At least some of the above and other features of the invention are set out in the claims.

### BRIEF DESCRIPTION OF THE DRAWINGS

The following drawings attached to the description illustrate embodiments of the present disclosure and, together with the detailed description of the present disclosure, provide a further description and understanding of the present disclosure, and accordingly, the present disclosure should not be interpreted as being limited to matters described in the drawings, in which:
FIG. 1 is a perspective view of an energy storage apparatus according to an embodiment;
FIG. 2 is a cross-sectional view of an energy storage apparatus according to an embodiment;
FIG. 3 is a plan view of a portion of an upper surface of the energy storage apparatus shown in FIG. 1 in an open state;
FIG. 4 is a plan view of the upper surface of the energy storage apparatus shown in FIG. 1 in a closed state;
FIG. 5 is a cross-sectional view taken along the line I-I' in FIG. 3;
FIG. 6 is a partial cross-sectional view taken along the line II-II' in FIG. 4;
FIG. 7 is a partial cross-sectional view taken along the line III-III' in FIG. 4;
FIG. 8A is an enlarged cross-sectional view of the portion A in FIG. 6 in which a locking protrusion is locked to a locking hole; and
FIG. 8B is an enlarged cross-sectional view of the portion A in FIG. 6 in which the locking protrusion is unlocked from the locking hole.

### DETAILED DESCRIPTION

Hereinafter, embodiments of the present disclosure are described, in detail, with reference to the attached drawings. Prior to the description, the terms or words used in the description and claims should not be construed as being limited to their ordinary or dictionary meanings but should be interpreted as having meanings and concepts consistent with the present disclosure based on the principle that the inventor may appropriately define the concepts of the terms to describe the invention of the inventor in the best way. It should be understood that components and configurations illustrated in the drawings and described herein are merely some embodiments of the present disclosure and do not represent all of the present disclosure, and thus, various equivalents and modifications may be made that may replace the same at the time of the present application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. For example, the expression "at least one of a, b, or c" indicates only a, only b, only c, both a and b, both a and c, both b and c, all of a, b, and c, or variations thereof. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

A person of ordinary skill in the art would appreciate, in view of the present disclosure in its entirety, that each suitable feature of the various embodiments of the present disclosure may be combined or combined with each other, partially or entirely, and may be technically interlocked and operated in various suitable ways, and each embodiment may be implemented independently of each other or in conjunction with each other in any suitable manner unless otherwise stated or implied.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein.

The terminology used herein is for the purpose of describing embodiments and is not intended to be limiting of the present disclosure.

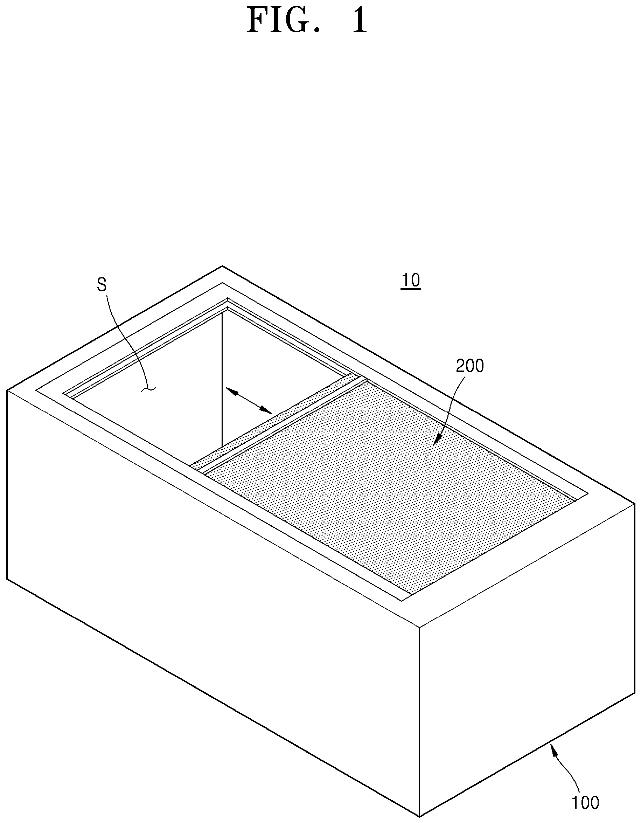

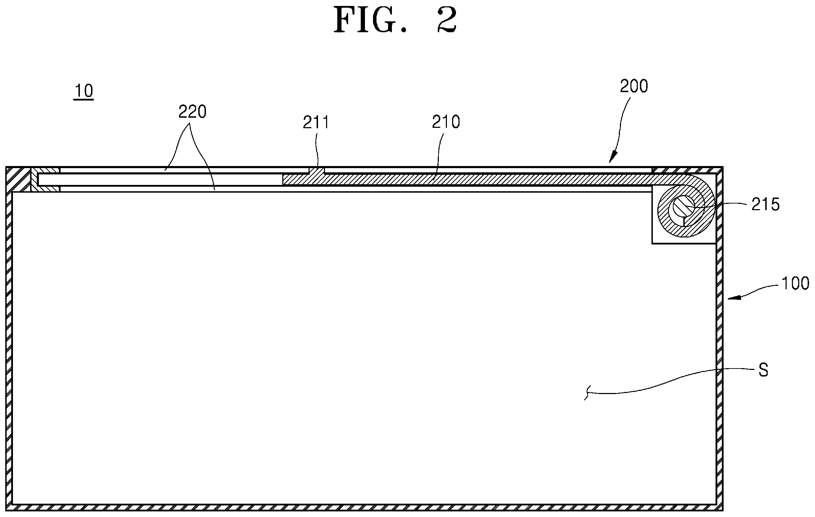

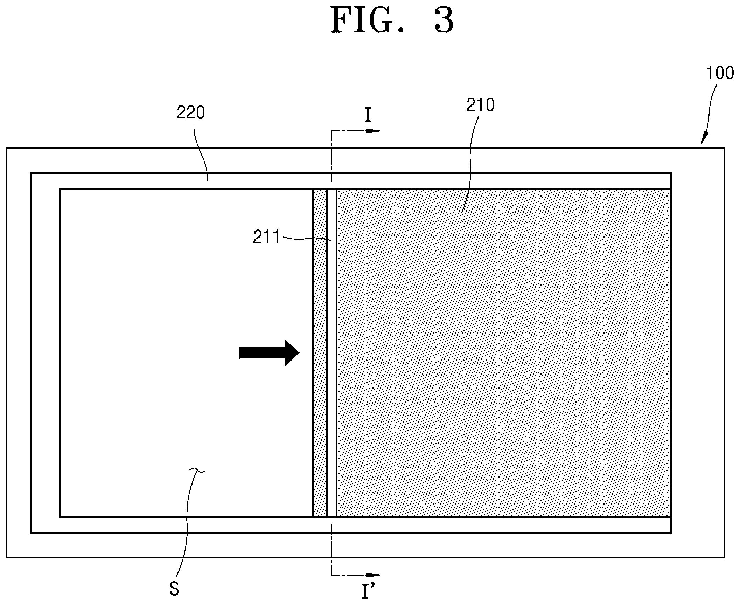

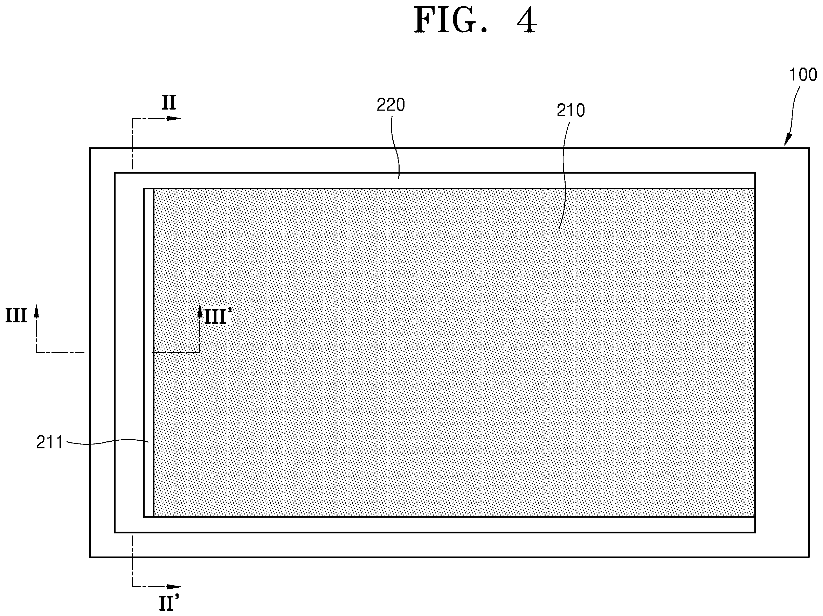

FIG. 1 is a perspective view of an energy storage apparatus according to an embodiment, and FIG. 2 is a cross-sectional view of an energy storage apparatus according to an embodiment. FIG. 3 is a plan view of a portion of an upper surface of the energy storage apparatus shown in FIG. 1 in an open state, and FIG. 4 is a plan view of the upper surface of the energy storage apparatus shown in FIG. 1 in a closed state.

Referring to FIG. 1, an energy storage apparatus 10 according to an embodiment may include an apparatus main body (e.g., a main body) 100 and a cover 200.

The apparatus main body 100 may have (or may form) an internal space S in which a plurality of batteries are accommodated. The apparatus main body 100 may be formed in a rectangular case structure having an upper surface that may be opened but is not limited thereto and may be formed in various shapes of case structures corresponding to shapes of the plurality of batteries accommodated in the internal space S.

The apparatus main body 100 may include a separate fixed structure, such as a rack frame, installed in the internal space S, and the plurality of batteries may be stacked and accommodated in the separate fixed structure installed in the apparatus main body 100.

The apparatus main body 100 may include the separate fixed structure, such as a rack frame, installed through the upper surface of the apparatus main body 100 in an open state. For example, the separate fixed structure may be inserted into the apparatus main body 100 in a vertical direction of the apparatus main body 100, and thus, the internal space S of the apparatus main body 100 may be accurately checked, and a plurality of fixed structures may be easily arranged at appropriate locations therein. For example, the plurality of fixed structures may be easily arranged and installed while reducing or minimizing the empty space in the internal space S of the apparatus main body 100.

Accordingly, a plurality of batteries may be more densely and closely stacked and accommodated in the internal space S of the apparatus main body 100, and thus, energy density of the energy storage apparatus 10 may be increased. For example, when the plurality of fixed structures are installed through a side of the apparatus main body 100 while the upper surface of the apparatus main body 100 is closed, installation work may be limited due to interference with the upper surface of the apparatus main body 100, such as a ceiling. Therefore, the plurality of fixed structures may not be easily arranged and installed in close proximity to one another without an empty space in the internal space S of the apparatus main body 100, and the plurality of batteries may not be easily stacked and accommodated densely and closely. Thus, the energy density of such an energy storage apparatus may be relatively low.

Referring to FIGS. 2 to 4, the cover 200 for the energy storage apparatus 10 may cover an upper surface of the apparatus main body 100 that is open. The cover 200 for the energy storage apparatus 10 may include a rotation shaft 215 and a cover main body 210.

The rotation shaft 215 may be arranged on one side of the open upper surface of the apparatus main body 100 (e.g., at a right side end of the apparatus main body 100 in the embodiment illustrated in FIG. 2), and one end portion of the cover main body 210 may be fixed to the rotation shaft 215. Therefore, when the rotation shaft 215 rotates in a forward direction (e.g., clockwise on the basis of FIG. 2), the cover main body 210 may be wound around one end portion (e.g., a proximal end) thereof and the upper surface of the apparatus main body 100 may be opened. When the rotation shaft 215 rotates in a backward direction (e.g., counterclockwise on the basis of FIG. 2), the cover main body 210 may be unwound on the basis of one end portion thereof and may close (e.g., may cover) the upper surface of the apparatus main body 100.

The rotation shaft 215 may be arranged to elastically have a rotation restoring force in a direction in which the cover main body 210 is wound, for example, in the forward direction. The rotation shaft 215 may be rotatably arranged on one side of the upper surface of the apparatus main body 100, and elastic members may be arranged at both ends of the rotation shaft 215 so that the rotation shaft 215 may have the rotation restoring force in the forward direction.

The cover main body 210 may have one end portion fixed to the rotation shaft 215 and may open or close (e.g., may uncover or cover) the upper surface of the apparatus main body 100 while being wound or unwound on the basis of the one end portion.

The cover main body 210 may include carbon fiber and may include (or may be) a sheet of a flexible material that may be wound or unwound in a roll form. For example, the cover main body 210 may include (or may be) a carbon fiber sheet. The cover main body 210 may be flexible and rigid by including carbon fiber and may block electromagnetic waves from leaking outside of the apparatus main body 100 when the upper surface of the apparatus main body 100 is closed.

The cover main body 210 may include a light-blocking material or may have a surface thereof coated with a light-blocking material. The cover main body 210 may include a material that blocks light and, thus, may block sunlight from entering (or reaching) an internal space S when the upper surface of the apparatus main body 100 is closed. Accordingly, the batteries may be prevented from being damaged by high-temperature overheating.

A manipulation portion 211 may be arranged at the other end portion (e.g., a distal end) of the cover main body 210. For example, the manipulation portion 211 may protrude from the other end portion of the cover main body 210 and have a bar shape corresponding to the other side of the upper surface of the apparatus main body 100 but is not limited thereto and may have a handle shape protruding upwardly from one side of the other end portion of the cover main body 210. The cover main body 210 may open or close (e.g., may cover or uncover) the upper surface of the apparatus main body 100 by being electrically wound or unwound on the basis of one end portion thereof.

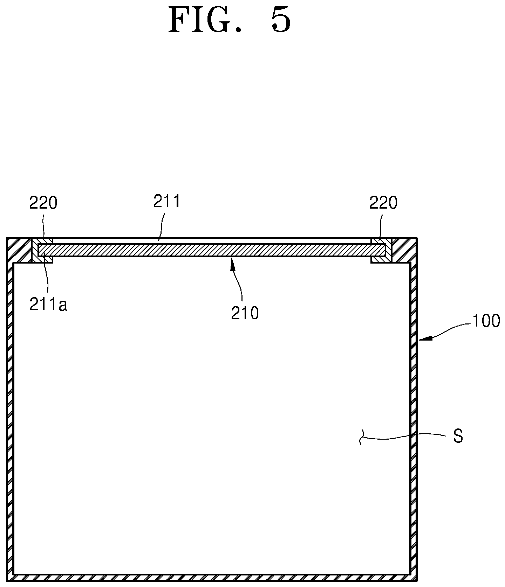

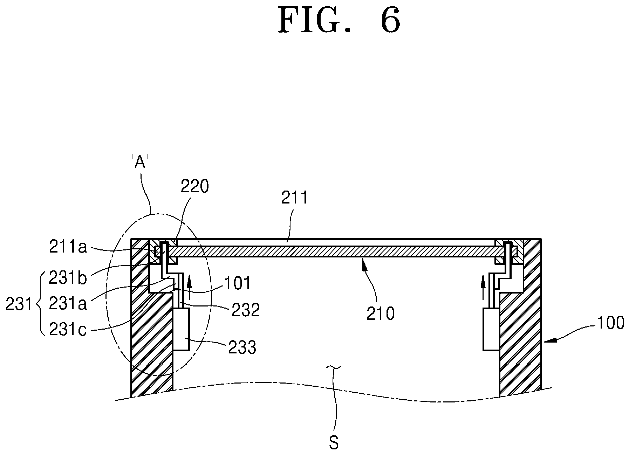

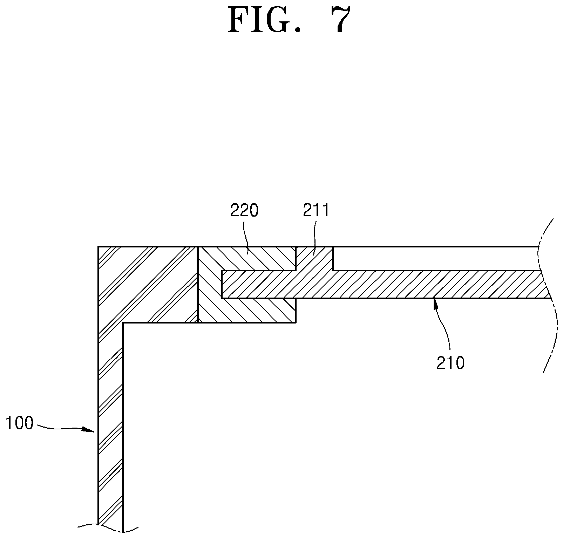

FIG. 5 is a cross-sectional view taken along the line I-I' in FIG. 3, and FIG. 6 is a cross-sectional view taken along the line II-II' in FIG. 4. FIG. 7 is a cross-sectional view taken along the line III-III' in FIG. 4.

Referring to FIGS. 5 to 7, the energy storage apparatus 10 may further include a sealing member 220.

The sealing member 220 may seal the internal space S of the apparatus main body 100 from the outside when the cover main body 210 closes the upper surface of the apparatus main body 100. Accordingly, a battery accommodated in the internal space S of the apparatus main body 100 may be protected, and external foreign materials may be prevented from penetrating into (or entering into) the internal space S to prevent contamination and damage of the battery.

The sealing member 220 may be arranged on an edge of the upper surface of the apparatus main body 100. For example, the sealing member 220 may be arranged on a remaining (or exposed) portion of the edge of the upper surface of the apparatus main body 100 except for a portion of the edge of the upper surface of the apparatus main body 100 on which one end portion of the cover main body 210 is located.

The sealing member 220 may have a vertical double protrusion structure (e.g., a sideways 'U' shape) to surround (e.g., to extend around) the other end portion of the cover main body 210 and an end portion 211a adjacent to the other end portion (e.g., left and right end portions on the basis of FIG. 5). For example, when opening and closing the upper surface of the apparatus main body 100, the cover main body 210 may be wound or unwound while the end portion 211a adjacent to the other end portion of the cover main body 210 (e.g., the left and right end portions on the basis of FIG. 5) is guided by the sealing member 220. Accordingly, the cover main body 210 may more stably and accurately perform a winding process and an unwinding process.

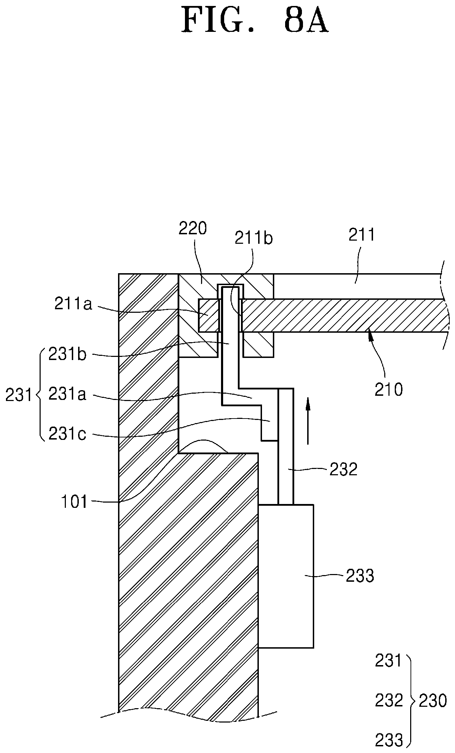

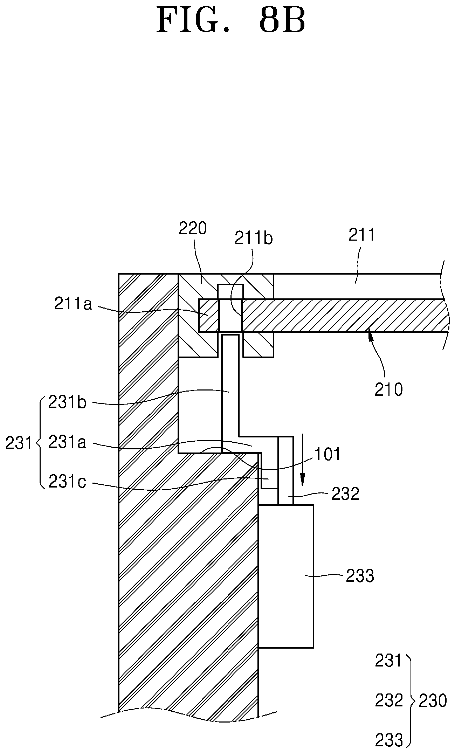

FIG. 8A is an enlarged cross-sectional view of the portion A in FIG. 6 in which a locking protrusion is locked in a locking hole, and FIG. 8B is an enlarged cross-sectional view illustrating the portion A in FIG. 6 in which the locking protrusion is locked in the locking hole.

Referring to FIGS. 6, 8A, and 8B, the energy storage apparatus 10 may further include a locking portion 230. The locking portion 230 may be arranged on the other side of the upper surface of the apparatus main body 100 to detachably fix the other end portion of the cover main body 110.

A plurality of locking portions 230 may be arranged on the other side of the upper surface of the apparatus main body 100 in a front-rear direction (e.g., a left-right direction on the basis of FIG. 6) to stably fix the cover main body 210 but are not limited thereto.

The locking portion 230 may include a locking protrusion 231, a moving rod 232, and an actuator 233.

The locking protrusion 231 may be arranged on the other side of the upper surface of the apparatus main body 100 to be linearly movable in a vertical direction.

The locking protrusion 231 may include a body portion (e.g., a body) 231a, a hooking portion (e.g., a hook) 231b, and a driving connection portion (e.g., a connection portion) 231c.

The body portion 231a of the locking protrusion 231 may be arranged between the hooking portion 231b and the driving connection portion 231c. The body portion 231a may interfere with the apparatus main body 100 when linear movement of the locking protrusion 231 is completed. For example, when the locking protrusion 231 is linearly moved upwardly and, thus, the other end portion of the cover main body 210 is locked into the locking protrusion 231, the body potion 231a may interfere with the apparatus main body 100 to prevent the locking protrusion 231 from being moved further upwardly. In some embodiments, when the locking protrusion 231 is linearly moved downwardly and, thus, the other end portion of the cover main body 210 is unlocked from the locking protrusion 231, the body portion 231a may interfere with the apparatus main body 100 to prevent the locking protrusion 231 from being moved further downwardly.

The hooking portion 231b of the locking protrusion 231 may protrude upwardly from one side of the body portion 231a. When the locking protrusion 231 is linearly moved upwardly, the hooking portion 231b may be coupled to a locking hole (e.g., a locking opening) 211b formed in the other end portion of the cover main body 210 to fix the cover main body 210. In some embodiments, when the locking protrusion 231 is linearly moved downwardly, the hooking portion 231b may be separated from (e.g., may be removed from) the locking hole 211b formed in the other end portion of the cover main body 210. When the locking protrusion 231 is unlocked from the cover main body 210, the cover main body 210 may be wound to open the upper surface of the apparatus main body 100.

The driving connection portion 231c of the locking protrusion 231 may be connected and fixed to the moving rod 232. Accordingly, when the driving connection portion 231c is linearly moved together with linear movement of the moving rod 232, the locking protrusion 231 may be linearly moved.

The moving rod 232 may be, for example, an interlocking shaft interlocked with the actuator 233 and may be linearly moved in the vertical direction when the actuator 233 is driven.

The moving rod 232 may linearly move the driving connection portion 231c, and the locking protrusion 231 may be coupled to or separated from the locking hole 211b in the cover main body 210 while being linearly moved due to the linear movement of the driving connection portion 231c.

The actuator 233 may be fixedly arranged on the apparatus main body 100 and may linearly move the moving rod 232 by receiving (e.g., in response to) a driving signal.

The actuator 233 may be, for example, a linear actuator to which a rack and pinion driving method is applied and may be an apparatus that receives (e.g., is configured to receive) a driving signal to convert rotational motion into linear movement of the moving rod 232.

The cover 200 for the energy storage apparatus 10 according to an embodiment and the energy storage apparatus 10 including the same may be configured to open and close (e.g., uncover or cover) the upper surface of the apparatus main body 100, and a fixed structure may be inserted into the apparatus main body 100 in the vertical direction through the upper surface of the apparatus main body 100. Therefore, energy density of the energy storage apparatus 10 may be increased by easily arranging and installing the fixed structure while reducing or minimizing an empty space in the internal space S in the apparatus main body 100.

In some embodiments, the cover main body 210 may open and close the upper surface of the apparatus main body 100 while being elastically wound or unwound. Accordingly, a component for opening and closing the upper surface of the apparatus main body 100 may be simplified, and an installation space may be reduced or minimized.

In some embodiments, the cover main body 210 may be manufactured by including carbon fiber and a light-blocking material, and thus, rigidity and durability of the cover main body 210 may be increased and high-temperature overheating damage to a battery due to sunlight may be prevented.

In some embodiments, the sealing member 220 may have a double protrusion structure surrounding (e.g., extend around) the end portion of the cover main body 210 and, thus, may effectively seal the internal space S of the apparatus main body 100 and stably guide the cover main body 210.

According to embodiments, a separate structure, such as a rack frame, for stacking and accommodating batteries inside an energy storage apparatus may be easily installed, and thus, the energy density of the energy storage apparatus may be optimized by reducing or minimizing an internal empty space of the energy storage apparatus.

However, aspects and features of the present disclosure are not limited to those described above, and other aspects and features not mentioned herein may be clearly understood by those skilled in the art from the description of the present disclosure.

Although the present disclosure has been described above in connection with embodiments thereof, the present disclosure is not limited thereto, and various modifications and variations may be made by those skilled in the art within the scope of the invention as defined by the claims below.

## Claims

1. A cover for an energy storage apparatus, the cover comprising:
a rotation shaft arranged on one side of an open upper surface of an apparatus main body; and
a cover main body having one end portion fixed to the rotation shaft and configured to open and close the open upper surface of the apparatus main body by being wound or unwound around the rotation shaft at the one end portion thereof.

2. The cover of claim 1, wherein the rotation shaft has an elastic rotation restoring force in a direction in which the cover main body is wound.

3. The cover of claim 1 or claim 2, further comprising a manipulation portion arranged on another end portion of the cover main body, the manipulation portion having a shape corresponding to another side of the open upper surface of the apparatus main body.

4. The cover of any preceding claim, wherein a sealing member is arranged on an edge of the open upper surface of the apparatus main body, and
wherein the sealing member is configured to seal an inside of the apparatus main body when the cover main body closes the open upper surface of the apparatus main body.

5. The cover of claim 4, wherein the sealing member is not at a portion of the edge of the open upper surface of the apparatus main body on which one end portion of the cover main body is arranged.

6. The cover of claim 4, wherein the sealing member surrounding the other end portion of the cover main body and an end portion adjacent to the other end portion.

7. The cover of any preceding claim wherein the cover main body includes a sheet of a flexible material.

8. The cover of any preceding claim wherein the cover main body includes a carbon fiber sheet.

9. The cover of any preceding claim wherein the cover main body includes a light-blocking material.

10. The cover of any preceding claim wherein the cover main body have a surface coated with a light-blocking material.

11. The cover of any preceding claim, further comprising a locking portion arranged on another side of the open upper surface of the apparatus main body and configured to detachably fix another end portion of the cover main body.

12. The cover of claim 11, wherein the locking portion comprises:
a locking protrusion arranged on the other side of the open upper surface of the apparatus main body and configured to be linearly movable in a vertical direction to be coupled to or separated from a locking hole in the other end portion of the cover main body; and
an actuator arranged on the other side of the open upper surface of the apparatus main body and configured to linearly move the locking protrusion.

13. The cover of claim 12, wherein the locking portion comprises:
a moving rod arranged between the actuator and the locking protrusion, and configured to be linearly moved by the actuator to linearly move the locking protrusion.

14. The cover of claim 11 to claim 13, wherein a plurality of locking portions are arranged in a front-back direction on the other side of the open upper surface of the apparatus main body.

15. An energy storage apparatus comprising:
an apparatus main body configured to accommodate a battery and having an open upper surface; and
a cover in accordance with any preceding claim configured to selectively cover the open upper surface of the apparatus main body.
